# EUROPEAN PATENT APPLICATION

(11) **EP 3 771 543 A1**
(43) Date of publication of application: **03.02.2021**
(21) Application number: 20188534.0
(22) Date of filing: 30.07.2020
(51) Int. Cl.: B29C 45/14, B29C 33/38, B29K 23/00, B29K 623/00, B29L 31/00

(54) **METHOD OF APPLYING A LABEL TO A CONTAINER, A CONTAINER PRODUCED BY SAID METHOD, AND AN INJECTION MOULD FOR PRODUCING A LABELLED CONTAINER**

(30) Priority: 31.07.2019 AU 2019902726
(71) Applicant: PakPot Pty Ltd, 5013 Wingfield SA (AU)
(72) Inventor: MATTO, Joe, WINGFIELD, SA 5013 (AU)
(74) Representative: Laine IP Oy

(57) **Abstract**

A method for applying a label to a container particularly suited for applying a polypropylene label to a polypropylene cup as it is moulded. The resultant container is made of a single type of plastic allowing it to be easily recycled. The mould used to produce the container has been designed to hold a label in place and stretch a portion of the label so it stays in place before injecting the plastic to form the container.

## Description

### FIELD OF THE INVENTION

The present invention relates to injection moulding, in particular a method of applying a label to an injection moulded container.

### BACKGROUND TO THE INVENTION

Small injection moulded containers are a popular choice for packaging individual serve sized portions of food such as yogurt. Such packaging is convenient for consumers as the foodstuff can be eaten directly from the container which is then disposed of. The containers are usually injection moulded and have a label attached with product information.

Typically the containers are made from polypropylene and the labels made from various layers of paper, polypropylene and glue to attach to the container. As the finished container is a mix of different materials it cannot be recycled as is, but needs to be separated into its constituent parts. The labels are often difficult to remove from the containers leading to a low recycling rate. The option of making the labels readily detachable is not suitable for commercial applications as it would be inconvenient to have labels detach prematurely, and making products un-saleable.

The applicant has identified an opportunity to produce a container and label made from the same material and firmly attached to each other in order to promote recycling.

The object of this invention is to provide a method of applying a label to a container to alleviate the above problems, or at least provide the public with a useful alternative.

### SUMMARY OF THE INVENTION

In a first aspect the invention provides a method of attaching a label to a container including the steps of inserting a label into a mould cavity, inserting a core into the mould cavity partially stretching the label outwards and injecting polypropylene into the mould beneath the label to form the container with the label firmly attached.

In a second aspect the invention provides an injection mould for producing a labelled container. The injection mould comprises a mould cavity for receiving raw material and a label as well as a core. The mould cavity is configured to receive the core. The core is configured to at least partially stretch the label outwards.

In preference mould is electrically charged to hold the label in place electrostatically.

In preference the method of attaching a label to a container as in claim1 wherein the mould cavity includes a side wall and a shoulder, the label sitting against the side wall but not the shoulder before the core is inserted.

Preferentially when the core is fully inserted into the mould cavity a void corresponding to the shape of the container is formed with the partially stretched label sitting within enabling plastic to be injected to form the container.

It should be noted that any one of the aspects mentioned above may include any of the features of any of the other aspects mentioned above and may include any of the features of any of the embodiments described below as appropriate.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows.
Figure 1 shows an above perspective view of a container used in accordance with the invention.
Figure 2 shows a side view of the container.
Figure 3 shows a label used in accordance with the invention
Figure 4 shows a below perspective view of the container.
Figure 5 shows a cross sectional view of the container.
Figure 6 shows a cross sectional view of an injection mould used to implement the invention.
Figure 7 shows a close-up view of a shoulder of the cavity of the mould.
Figure 8 shows a label introduced into the cavity.
Figure 9 shows the core of the mould coming into contact with the label.
Figure 10 shows the label being stretched by the core.
Figure 11 shows the label further stretched by the core.
Figure 12 shows the core fully engaged with the cavity ready for moulding.
Figure 13 shows the mould with a moulded container with label attached.
Figure 14 shows a close up view of the skirt of the mould with a label in place ready for moulding.
Figure 15 shows the skirt of the mould with the core in place ready for moulding.

### DRAWING COMPONENTS

The drawings include the following integers.
- 10: container
- 12: side wall
- 14: lip
- 16: shoulder
- 18: skirt
- 20: floor
- 22: foot
- 30: label
- 40: mould
- 42: shoulder region
- 44: skirt region
- 50: cavity
- 51: floor
- 52: side wall
- 53: foot
- 56: shoulder
- 58: skirt
- 60: core
- 62: side wall
- 66: shoulder

### DETAILED DESCRIPTION OF THE INVENTION

The following detailed description of the invention refers to the accompanying drawings. Wherever possible, the same reference numbers will be used throughout the drawings and the following description to refer to the same and like parts. Dimensions of certain parts shown in the drawings may have been modified and/or exaggerated for the purposes of clarity or illustration.

The present invention provides a method for applying a label to a container. It is particularly suited for applying a polypropylene label to a polypropylene cup as it is moulded. The resultant container is made of a single type of plastic allowing it to be easily recycled. In essence the mould used to produce the container has been designed to hold a label in place and stretch a portion of the label so it stays in place before injecting the plastic to form the container.

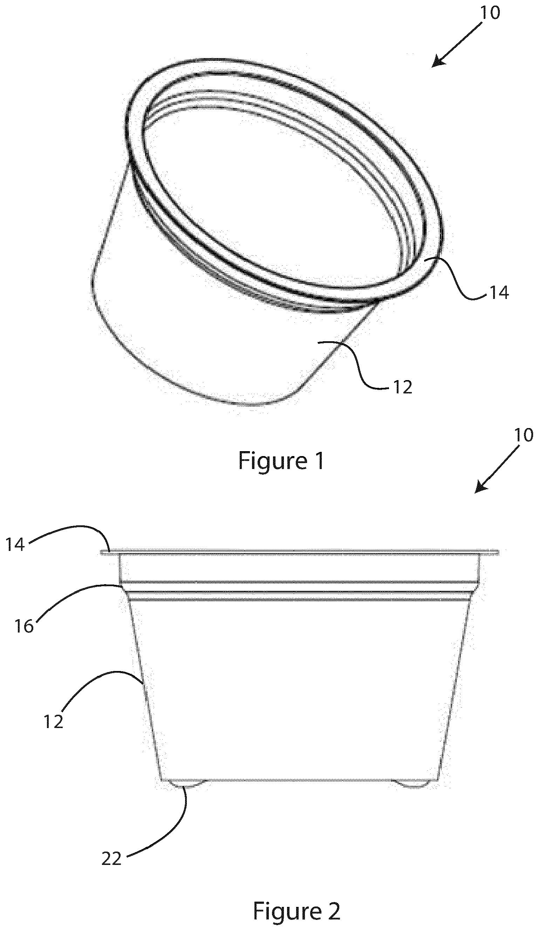

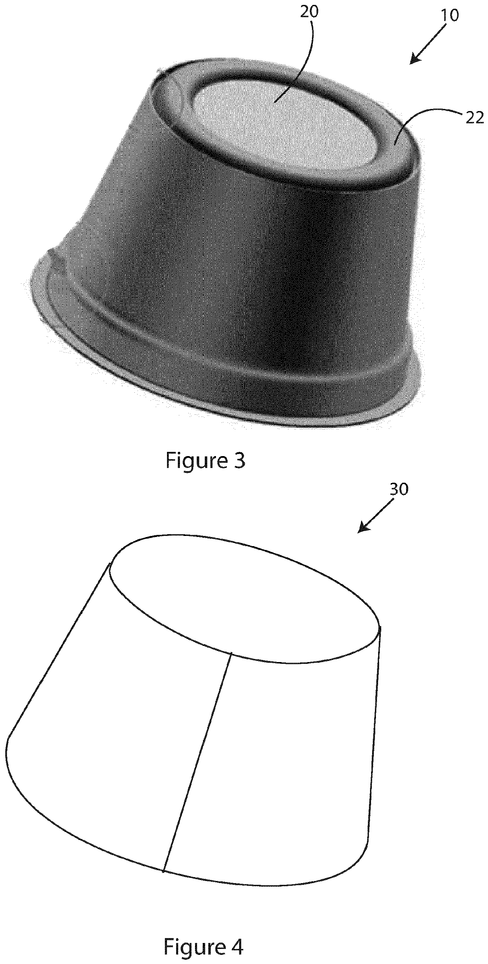

A container 10 made with aid of the invention is shown from a top perspective view in Figures 1, side view in Figure 2 and bottom perspective view in Figure 3. The container 10 is generally frustoconical in shape, with divergent side wall 12 topped by shoulder 16 and lip 14. Floor 20 includes a circular foot 22. Figure 4 shows a label 30 that is affixed to the container, which is formed from a strip of material joined end to end to form a hollow frustum conforming to the side walls 12. The label is the same length as the side walls and shoulder together, and is stretched at the shoulder end during the moulding process so that it can fit over the shoulder 16.

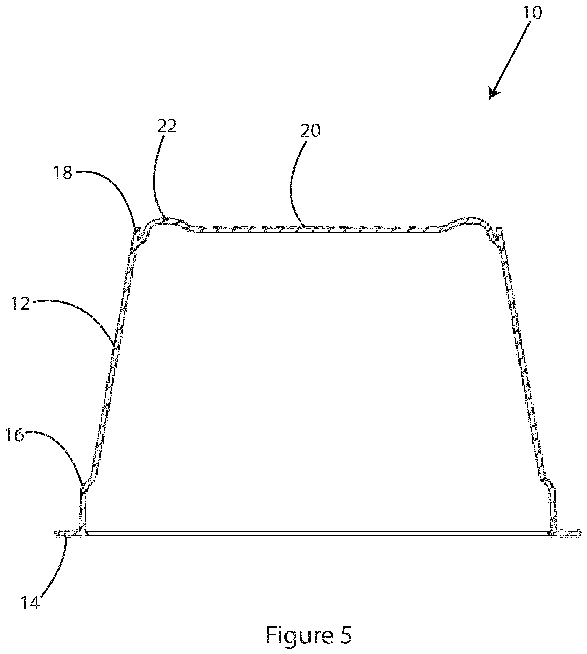

Figure 5 shows a cross sectional view of the container 10, which in addition to the features described above shows a skirt 18 at the bottom of the sidewall 12 which aides in holding the label during the moulding process.

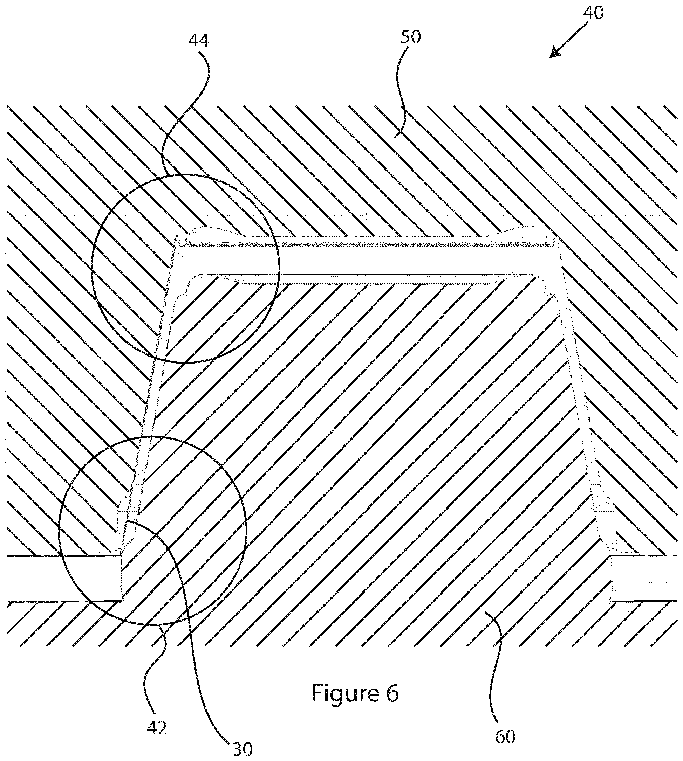

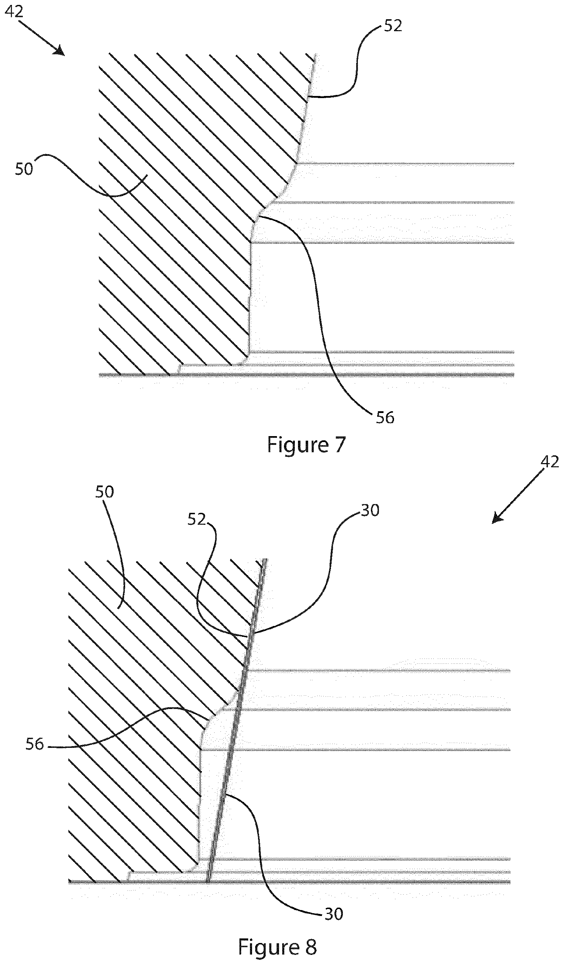

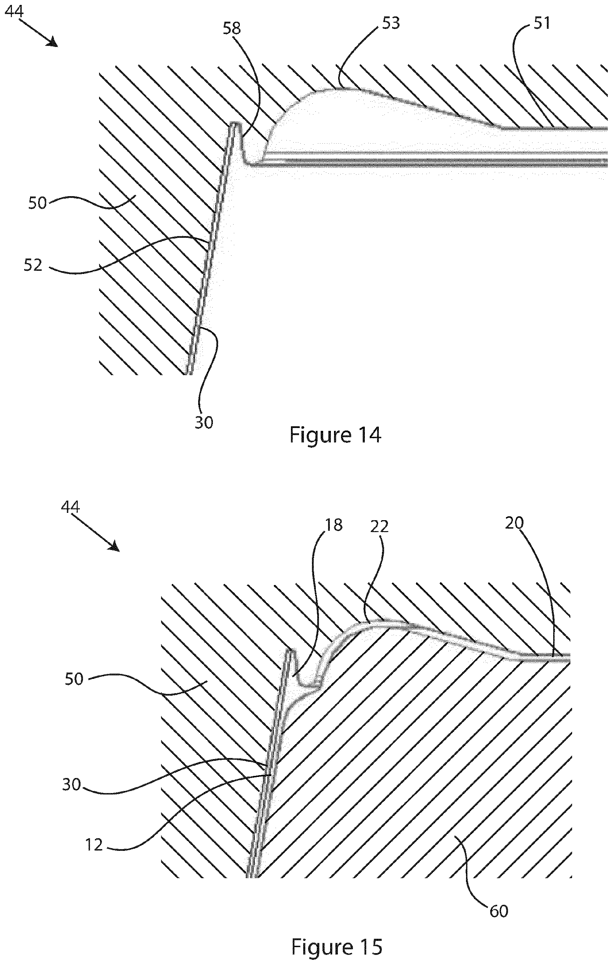

The invention uses an injection mould in process to produce a container with a label attached. A label is held in a mould cavity and then a core inserted which partially stretches the label. Polypropylene is then injected into the mould beneath the label to form the container with the label firmly attached. Figure 6 shows a representation of the mould 40, with cavity 50 and partially inserted core 60. A label 30 sits within the cavity. Formation of the container is described below with the aid of Figures 7 to 13 in relation to the shoulder region 42 of the mould, and Figures 14 and 15 in relation to she skirt region 44 of the mould.

Figure 7 shows a close-up view of the shoulder region 42 of the mould with the core removed from the cavity 50 in preparation for making a new container. The cavity 50 includes a side wall 52 and shoulder 56 which correspond with the side wall 12 and shoulder 16 of the finished container 10. Figure 8 shows a label 30 introduced into cavity 50. The label 30 sits against the side wall 52, but away from the shoulder 56. The cavity is electrically charged to hold the label 30 in place electrostatically.

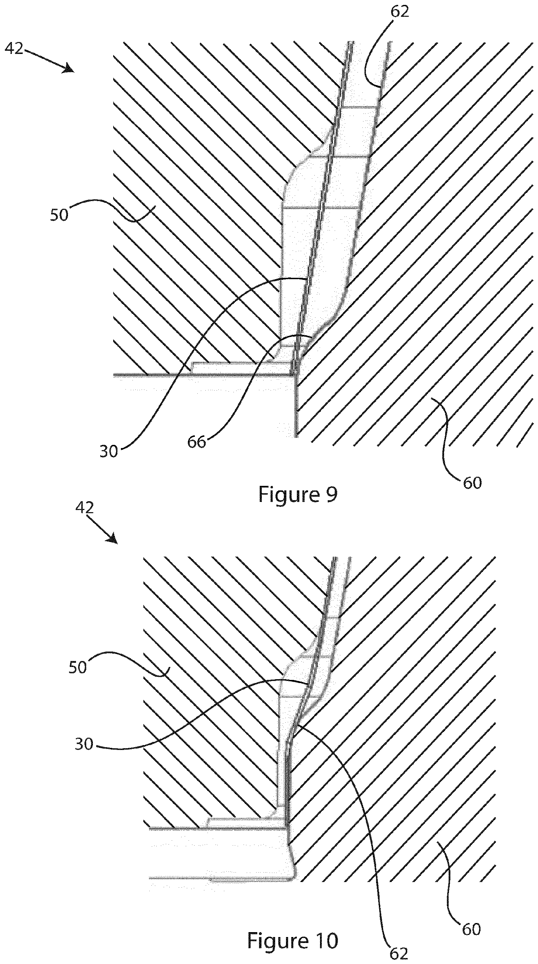

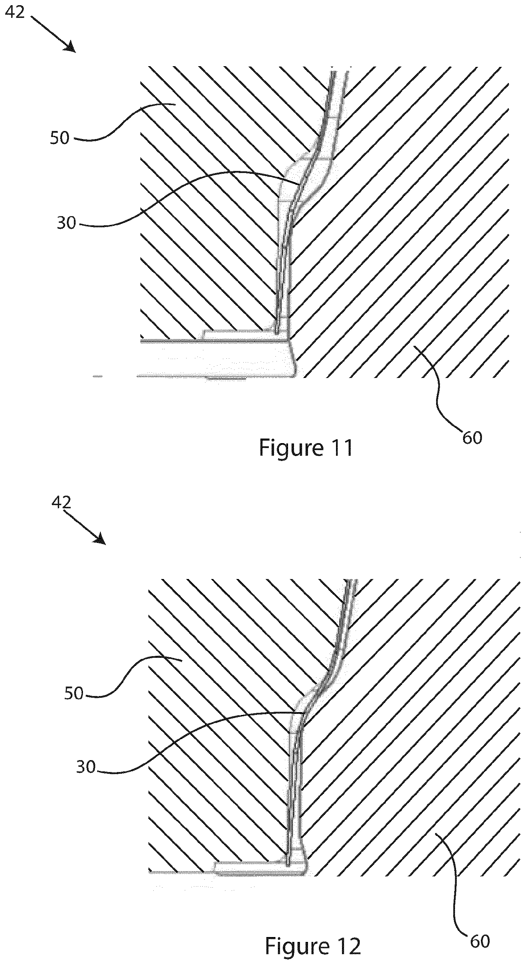

Figures 9 to 12 show a sequence of the core 60 being introduced into the cavity 50. The core 60 includes a side wall 62 and shoulder 66 which correspond with the side wall 12 and shoulder 16 of the finished container 10. As the core 60 enters the cavity 50, the shoulder 62 of the core comes into contact with the label 30 and stretches it outwards. When the core 60 is fully inserted into the cavity 50 as seen in Figure 12, a void corresponding to the shape of the container is formed with a partially stretched label 30 sitting within. The mould is now ready for plastic to be injected to form the container.

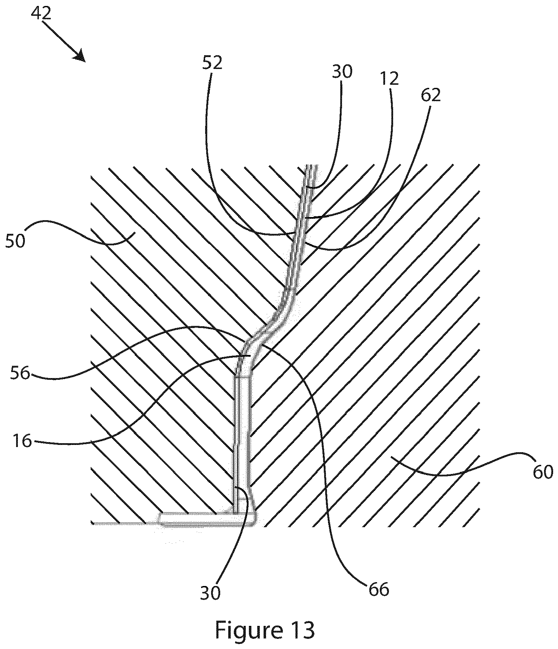

Figure 13 shows the mould after plastic has been injected. As the plastic is injected it forms the container in the void between the cavity 50 and the core 60. In doing so the label 30 sits against the side wall 52 of the cavity and the plastic flows along the side wall 62 of the core. The plastic stretches the label 30 against the shoulder 56 of the cavity and away from the shoulder 66 of the core. The resulting container has a side wall 12 and shoulder 16 covered by a label. The label has been stretched in the shoulder region, keeping the label in place. There is also a degree of thermal fusion between the label and the container.

Figures 14 and 15 show close up views of the skirt section 44 of the mould. Figure 14 corresponds with Figure 8 and shows the mould cavity with a label 30 fitted ready for the moulding process, whilst Figure 15 corresponds with Figure 13 showing the mould after plastic has been injected to form the container with the core 60 fully inserted into the cavity 50. The cavity 50 includes floor 51, foot 53 and skirt 58 which correspond to the floor 20, foot 22 and skirt 18 of the final container. The skirt 58 of the mould helps position the label 30 and ensures that it doesn't crumple as the core 60 is inserted.

The reader will now appreciate the present invention which provides a method of producing a plastic container that allows the container body and label to be made of the same material allowing the container to be easily recycled.

Existing products and processes use a thermoformed cup (PP) which is than shrink sleeved (PET) to produce the cup. This makes it an alloy (PP + PET) and therefore not recyclable post-consumer waste.

The current application teaches a new process to apply a label using the same material as the substrate (tub) (PP) therefore the final product is 100% recyclable post-consumer waste. It is also a much more efficient process reducing the cost of manufacture.

The invention is based on product design / section profile to get the most efficient profile for the label to stretch over the shoulder in its 3D path. The he label application process can only be achieved by applying the label with interference with the core half and then using the injection filling process - the resin is left to iron out the label to follow the 3D path (shoulder) and result in the label covering the tub.

Further advantages and improvements may very well be made to the present invention without deviating from its scope. Although the invention has been shown and described in what is conceived to be the most practical and preferred embodiment, it is recognized that departures may be made therefrom within the scope of the invention, which is not to be limited to the details disclosed herein but is to be accorded the full scope of the claims so as to embrace any and all equivalent devices and apparatus. Any discussion of the prior art throughout the specification should in no way be considered as an admission that such prior art is widely known or forms part of the common general knowledge in this field.

In the present specification and claims (if any), the word "comprising" and its derivatives including "comprises" and "comprise" include each of the stated integers but does not exclude the inclusion of one or more further integers.

## Claims

1. A method of attaching a label to a container including the steps of:
inserting a label into a mould cavity;
inserting a core into the mould cavity partially stretching the label outwards;
injecting polypropylene into the mould beneath the label to form the container with the label firmly attached.

2. The method of attaching a label to a container as in claim 1 wherein the mould is electrically charged to hold the label in place electrostatically.

3. The method of attaching a label to a container as in claim 1 wherein the mould cavity includes a side wall and a shoulder, the label sitting against the side wall but not the shoulder before the core is inserted.

4. The method of attaching a label to a container as in claim 1 wherein when the core is fully inserted into the mould cavity a void corresponding to the shape of the container is formed with the partially stretched label sitting within enabling plastic to be injected to form the container.

5. A container produced as per the method of any one of the preceding claims.

6. An injection mould for producing a labelled container, the injection mould comprising:
- a mould cavity for receiving raw material and a label and
- a core,
wherein:
- the mould cavity is configured to receive the core;
- the core is configured to at least partially stretch the label outwards.

7. The injection mould according to claim 6, wherein the injection mould comprises an electric charging input which is configured to provide an electric charge to the injection mould for holding the label in place electrostatically.

8. The injection mould according to claim 6 or 7, wherein the mould cavity comprises:
- a side wall for receiving the label against the side wall and
- a shoulder shaped to not engage the label before the core is inserted.

9. The injection mould according to any one of the preceding claims 6 to 8, wherein the side wall comprises a bottom which, in turn, comprises a skirt configured to hold the label during the moulding process.

10. The injection mould according to any one of the preceding claims 6 to 9, wherein when the core is fully inserted into the mould cavity a void corresponding to the shape of the container is formed with the partially stretched label sitting within enabling plastic to be injected to form the container.
